# EUROPÄISCHE PATENTSCHRIFT

(11) **EP 0 761 500 B1**
(45) Veröffentlichungstag und Bekanntmachung des Hinweises auf die Patenterteilung: **24.11.1999**
(21) Anmeldenummer: 96114034.0
(22) Anmeldetag: 03.09.1996
(51) Int. Cl.: B60R 1/00

(54) **Bildaufnahmemodul**
Image pickup unit
Unité de prise d'image

(30) Priorität: 07.09.1995 DE 29514364 U
(43) Veröffentlichungstag der Anmeldung: 12.03.1997
(73) Patentinhaber: Donnelly Hohe GmbH & Co. KG, 97903 Collenberg (DE)
(72) Erfinder: Fürst, Peter, 63927 Bürgstadt (DE); Kaspar, Rudolf, 97903 Collenberg (DE); Werner, Harals, 97903 Collenberg (DE)
(74) Vertreter: Zinngrebe, Horst, Dr.rer.nat.

(56) Entgegenhaltungen:
- EP-A- 0 477 986
- DE-A- 2 919 968
- DE-A- 4 345 147
- PATENT ABSTRACTS OF JAPAN vol. 9, no. 67 (M-366), 27.März 1985 & JP-A-59 199343 (NAIRUSU BUHIN), 12.November 1984,
- PATENT ABSTRACTS OF JAPAN vol. 15, no. 261 (E-1085), 3.Juli 1991 & JP-A-03 085070 (TOSHIBA), 10.April 1991,
- PATENT ABSTRACTS OF JAPAN vol. 18, no. 358 (M-1633), 6.Juli 1994 & JP-A-06 092183 (TOOBI RES), 5.April 1994,
- PATENT ABSTRACTS OF JAPAN vol. 16, no. 577 (P-1460), 16.Dezember 1992 & JP-A-04 225341 (CHINON IND), 14.August 1992,
- PATENT ABSTRACTS OF JAPAN vol. 16, no. 94 (M-1219), 9.März 1992 & JP-A-03 273953 (AISIN SEIKI), 5.Dezember 1991,
- PATENT ABSTRACTS OF JAPAN vol. 16, no. 401 (E-1253), 25.August 1992 & JP-A-04 132467 (TOSHIBA), 6.Mai 1992,
- PATENT ABSTRACTS OF JAPAN vol. 16, no. 414 (M-1303), 3.September 1992 & JP-A-04 138943 (TOSHIBA), 13.Mai 1992,
- PATENT ABSTRACTS OF JAPAN vol. 15, no. 84 (P-1172), 27.Februar 1991 & JP-A-02 300715 (TOSHIBA), 12.Dezember 1990,

## Beschreibung

Die Erfindung betrifft ein in ein Karosserieteil einbaubares Bildaufnahmemodul nach dem Oberbegriff des Anspruches 1.

Für Fahrer ist es stets ein Problem, den Raum neben und hinter ihrem Fahrzeug einsehen zu können. An Sonderzwecken dienenden Nutzfahrzeugen werden daher gelegentlich im Heck oder an der Seite Kameras eingebaut, deren Bilder auf einem im Sichtbereich des Fahrers angebrachten Monitor aufscheinen. Eine Weiterentwicklung stellen die sogenannten Flachbildschirmdisplay-Systeme dar, die weniger Raum beanspruchen und preiswert sind.

Die Gefahr einer Verschmutzung der Aufnahmefläche der Kamera oder dergleichen Systeme spielt in den bisherigen Einsatzfällen nur eine untergeordnete Rolle, weil die Bildaufnahmeeinrichtungen an geschützter Stelle am Fahrzeug untergebracht sind.

Bei einer Verwendung einer Bildaufnahmeeinrichtung etwa am Heck eines Personenkraftwagens wird die Verschmutzung der Linse oder dergleichen Aufnahmeflächen ein gravierendes Problem wegen der höheren Fahrleistungen und Geschwindigkeiten dieser Fahrzeuge im Verhältnis zu den Nutzfahrzeugen.

Aus dem Dokument JP-A-1 99 343/84 ist ein Bildaufnahmemodul der eingangs genannten Art bekannt, bei welchem eine Klarsichtscheibe innerhalb des Gehäuses elektromotorisch hinter einer Gehäuseöffnung vorbeigedreht wird. Auf der Vorderseite der Klarsichtscheibe ist ein die Öffnung umgebender Wischerring befestigt, der die Aufgabe hat, die vorbeidrehende Klarsichtscheibe zu reinigen. Nachteilig ist, daß der zum Einbau in ein Fahrzeug benötigte Einbauraum für das Gehäuse relativ groß ist und der Reinigungsring den sauber zu haltenden Teil der Klarsichtscheibe häufig so verschmiert, daß für die Bildaufnahmeeinrichtung eine klare Sicht nach hinten nicht mehr möglich ist.

Der Erfindung liegt daher die Aufgabe zugrunde, eine Möglichkeit zu schaffen, die Aufnahmefläche einer Bildaufnahmeeinrichtung auch im harten Fahrzeugbetrieb funktionsfähig zu erhalten.

Erfindungsgemäß wird bei dem eingangs genannten Bildaufnahmemodul vorgesehen, daß die Klarsichtscheibe in die Gehäuseöffnung dichtend eingesetzt ist und vor der Vorderwand des Gehäuses eine Waschdüse sowie ein motorisch angetriebener Scheibenwischer angeordnet sind. Dadurch kann der Einbauraum für das Bildaufnahmemodul gegenüber dem Bekannten auf etwa die Hälfte reduziert werden, wobei stets klare Sicht durch die Klarsichtscheibe gewährleistet bleibt.

Bevorzugte Ausgestaltungen der Erfindung sind in den Unteransprüchen angegeben.

Die Erfindung wird nachstehend anhand der in der beigefügten Zeichnung dargestellten Ausführungsbeispiele im einzelnen beschrieben. Es zeigen:
Fig. 1 ein Bildaufnahmemodul in Seitenansicht nach Abnahme einer Gehäusenseitenwand, das zur Erfindung nicht gehört.
Fig. 2 eine der Fig. 1 ähnliche Ansicht einer modifizierten Haltevorrichtung für eine Bildaufnahmeeinrichtung, wobei das Bildaufnahmemodul zur Erfindung gehört.
Fig. 3 eine schematische Darstellung der Verwendung des Bildaufnahmemoduls.

Das im Ganzen mit 1 bezeichnete Bildaufnahmemodul besitzt ein rechtwinkeliches Gehäuse 5, welches eine Bildaufnahmeeinrichtung 10 beherbergt und dessen Inneres durch eine abnehmbare Rückwand 11 für Wartungszwecke und dergleichen zugänglich ist. Die Bildaufnahmeeinrichtung 10 umfasst im hier dargestellten Ausführungsbeispiel einen auf einer Leiterkarte 12 befestigten CCD-Sensor 14, der zum Schutz vor Umwelteinflüssen und Streulicht von einer Abdeckung 16 umgeben ist. Vor der Abdeckung 16 ist eine Objektivaufnahme 18 sowie ein Objektiv 15 befestigt. Auf der Leiterplatte 12 befindet sich eine elektronische Schaltung 13 zur Aufbereitung und Verarbeitung der vom CCD-Sensor 14 aufgenommenen Bildsignale. Über eine an der Leiterplatte 12 befestigte, aus der Rückwand 11 nach außen vorstehende und mit der elektronischen Schaltung 13 verbundene Leiterfahne 17 ist die eletronische Schaltung 13 mit dem Bordnetz eines Fahrzeugs verbindbar.

An einer der Rückwand 11 gegenüberliegenden Vorderwand 3 des Gehäuses 5 sind mehrere Anschraublaschen 4, 6 mit Bohrungen angeformt, die zum Anschrauben des Bildaufnahmemoduls 1 an ein Karrosserieteil, beispielsweise eine Heckklappe, dienen. Im mittleren Bereich weist die Vorderwand 3 einen Vorspung 7 mit einer zentralen Öffnung 2 auf, wobei oberhalb der Öffnung 2 ein Sackloch 8 zur Aufnahme eines Mikrofons und unterhalb der zentralen Öffnung 2 eine weitere Ausnehmung 9 für noch zu beschreibende Teile einer Reinigungsvorrichtung ausgebildet sind.

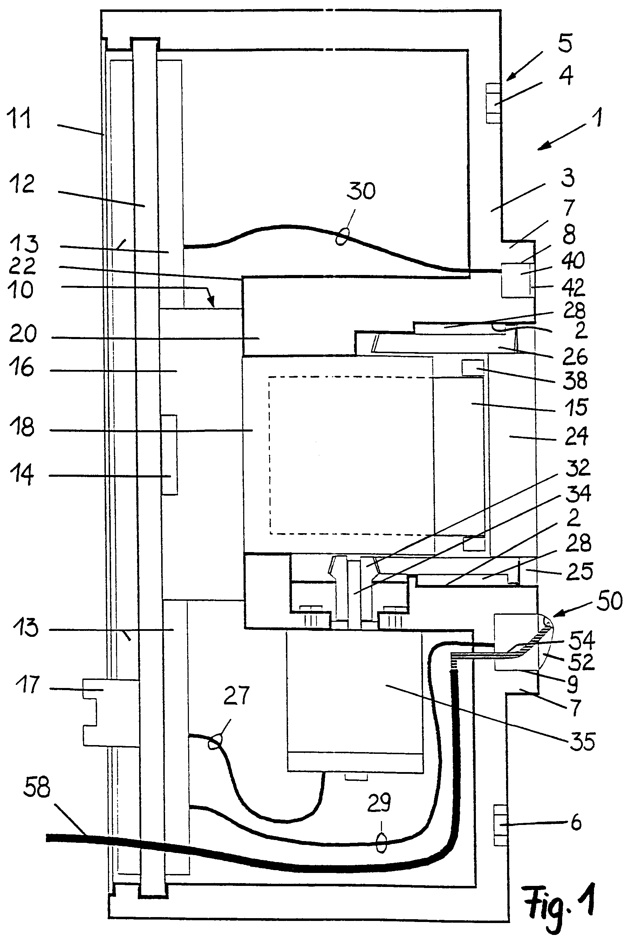

Die sich in das Innere des Gehäuses 5 fortsetzende Öffnung 2 wird im Inneren des Gehäuses 5 von einem Tubus 20 definiert, in dessen Axialöffnung 2 die Ojektivaufnahme 18 der Bildaufnahmeeinrichtung 10 spielfrei eingesetzt werden kann, so daß die vordere Stirnfläche der Abdeckung 16 an einer Stirnwand 22 des Tubus 20 anliegt. Wenn die Objektivaufnahme 18 der Bildaufnahmeeinrichtung 10 gemäß Fig. 1 in den Tubus 20 eingesetzt ist, reicht das Objektiv 15 bis kurz vor eine dicke strahlungdurchlässige Scheibe 24, die fest in die Öffnung 2 eingesetzt ist und deren Vorderfläche mit der Außenfläche des Vorsprungs 7 fluchtet.

Die Befestigung der Scheibe 24 am vorderen Ende des Tubus 20 geschieht bei dem in Fig. 1 dargestellten Ausführungsbeispiel in der Weise, daß die Klarsichtscheibe 24 in eine axial in der Öffnung 2 angeordnete und über Wälzlager 28 im Tubus 20 gelagerte und relativ zu diesem drehbare Zahnradbuchse 26 stirnseitig fest eingesetzt ist. Vor der Zahnradbuchse 26 ist die Klarsichtscheibe 24 mit einem Dichtring 25 umgeben, der das Eindringen von Schmutz und Wasser in die Öffnung 2 verhindert und damit das Wälzlager 28 schützt. Der an dem von der Klarsichtscheibe 24 abgewande Ende der Zahnradbuchse 26 ausgebildete Zahnkranz kämmt mit einem Wellenzahrad 32, welches auf eine sich quer zur Achse der Zahnradbuchse 26 erstreckende Abtriebswelle 34 eines an der Unterseite des Tubus 20 befestigten Elektromotors 35 kämmt. Der Elektromotor 35 ist über ein Stromversorgungskabel 27 mit der elektronischen Schaltung 13 verbunden. Wird der Elektromotor 35 von der Schaltung 13 über das Kabel 27 aktiviert, versetzt er über die Drehung seiner Abtriebswelle 34 die Klarsichtscheibe 24 in schnelle Umdrehungen um die Mittellinie der Öffnung 2, die gleichzeitig die Mittellinie der Zahnradbuchse 26 ist. Der Dichtring 25 nimmt an der Drehung nicht teil.

Das vordere Ende des Objetivs 15 ist von einem Heizring 38 umgeben, der in nicht näher dargestellter Weise im Inneren des Tubus 20 gehalten ist. Der Heizring 38 kann sowohl mit einer Heizwicklung versehen sein wie auch mit einem Widerstandsmaterial beschichtet sein. Auch ist es möglich, den Heizring 38 als selbstregelndes PTC-Element etwa gemäß DE-PS 29 19 968 auszuführen. Nicht dargestellt sind ferner die elektrischen Zuleitungen zu dem Heizring 38 von der elektronischen Schaltung 13.

In die Öffnung 8 ist ein Mikrofon 40 eingesetzt, das über eine Leitung 30 mit der elektronischen Schaltung 13 verbunden ist. In der elektronischen Schaltung 13 befindet sich eine Verstärkerschaltung zur Verstärkung des aufgenommenen Schalls. Über die Anschlußfahne 17 wird das Tonsignal an einen im Wagenfond befindlichen Lautsprecher übertragen. Damit stehen dem Fahrzeugführer neben der optischen Information durch die Bildaufnahmeeinrichtung 10 auch eine akkustische Information zur Verfügung. Vor dem Mikrofon 40 ist eine Membran 42 zum Schutz vor negativen Umwelteinflüssen angebracht. Das Mikrofon 40 kann ein Elektredmikrofon oder ein Kondensatormikrofon sein.

Die Reinigungsvorrichtung, im Ganzen mit 50 bezeichnet, umfaßt eine in die Öffnung 9 eingesetzte Waschdüse 52, in die eine im einzelnen nicht dargestellte Heizung eingebaut sein kann. Auch diese Heizung kann selbstregelnd entsprechend dem genannten Patent sein. An das Waschdüsengehäuse ist ein Anschlußrohr 54 angeformt, welches über einen angeschlossenen Schlauch 58 mit einer Reinigungsfüssigkeit versorgt wird. Selbstverständlich steht die Austrittsdüse der Waschdüse 52 in einem solchen Winkel zur Außenfläche der Klarsichtscheibe 24, daß diese über eine nicht dargestellte und mit der elektronischen Schaltung 13 verbundene Pumpe mit Reinigungsflüssigkeit aus einem nicht dargestellten Vorratsbehälter bespritzt werden kann. Wenn gleichzeitig die Klarsichtscheibe 24 durch den aktivierten Elektromotor 35 in Rotation versetzt wird, wird der durch die Reinigungsflüssigkeit gelöste Schmutz weggeschleudert. Die Heizung innerhalb der Waschvorrichtung 50 ist über eine elektrische Leitung 29 mit der elektrischen Schaltung 13 verbunden.

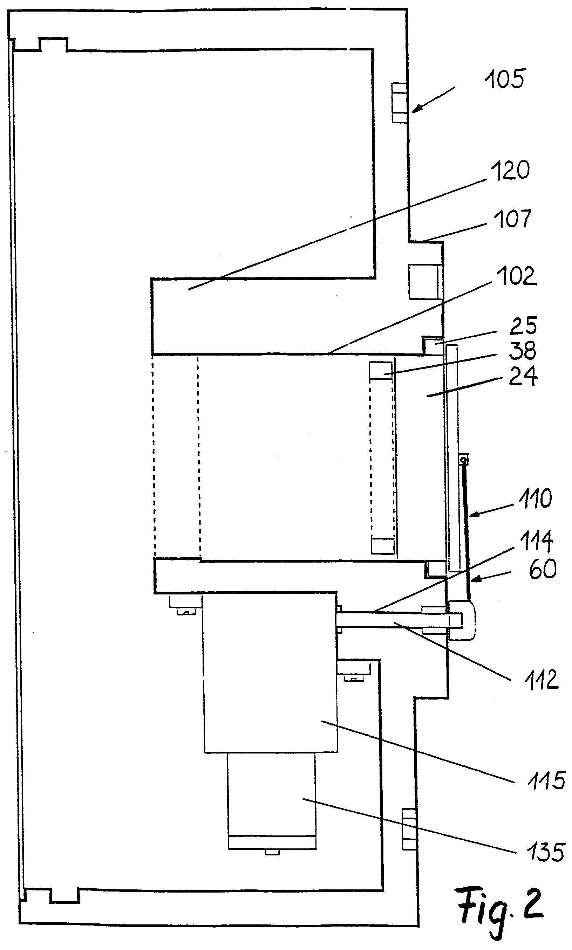

Fig. 2 zeigt das Bildaufnahmemodul mit einer etwas anderen Ausführungsform der Reinigungsvorrichtung 60. Aus der vorderen Stirnwand des Gehäuses 105 steht wieder um die Stärke der Karrosserie eines Fahrzeugs ein mittlerer Vorsprung 107 vor, dessen zentrale Öffnung 102 von einem Tubus 120 gebildet ist. In den Tubus 120 kann wie bei dem vorstehend beschriebenen Ausführungsbeispiel von hinten eine Objektivaufnahme eingeschoben werden, so daß das Objektiv mit seiner vorderen Aufnahmefläche dicht hinter der Klarsichtscheibe 24 innerhalb eines Heizrings 38 gehalten ist. Zusätzlich zu der Waschdüse 52 aus dem vorstehend beschriebenen Beispiel ist hier neben der selben einem Ganzen mit 110 bezeichneter Scheibenwischer angeordnet. Der Scheibenwischer 110 ist auf eine Welle 112 aufgeklemmt, die in einer Durchgangsbohrung 114 im Vorsprung 107 unterhalb der Öffnung 102 drehbar gelagert ist und hinter dem Vorsprung 107 im Inneren des Gehäuses 105 über ein schematisch dargestelltes Getriebe 115 mit der nicht im einzelnen dargestellten Abtriebswelle eines Elektromotors 135 gekoppelt ist. In bekannter Weise wird bei elektrischer Aktivierung des Elektromotors 135 die Welle 112 zur hin- und hergehenden Drehung um einen vorgegebenen Winkelbereich veranlaßt, was den Scheibenwischer 110 über die Außenfläche der Klarsichtscheibe 24 hin- und her führt. In Verbindung mit der Reinigungsvorrichtung 50 ist daher das in Fig. 2 dargestellte Bildaufnahmemodul mit einer Wischwascheinrichtung für die Klarsichtscheibe 24 ausgerüstet.

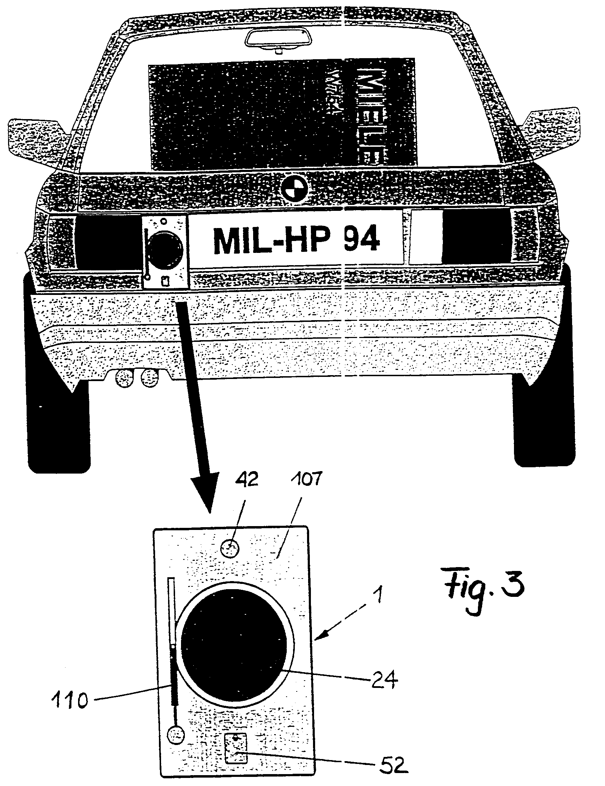

Gemäß Fig. 3 kann das Bildaufnahmemodul in eine hintere Bordwand eines PKW mit Hilfe der Laschen 4, 6 eingebaut werden, aus der dann nur der Vorsprung 7 beziehungsweise 107 von außen zu erkennen ist.

## Patentansprüche

1. In ein Karosserieteil einbaubares Bildaufnahmemodul (1) mit einem eine Bildaufnahmeeinrichtung (10, 15) umgebenden Gehäuse (5), in welchem die Bildaufnahmeeinrichtung hinter einer eine Gehäuseöffnung (2) abdeckenden Klarsichtscheibe (24) gehalten ist, wobei hinter der Klarsichtscheibe (24) ein Objektiv (15) der Bildaufnahmeeinrichtung (10) angeordnet ist und an der Klarsichtscheibe eine Reinigungseinrichtung (50, 60) vorgesehen ist, dadurch gekennzeichnet, daß die Klarsichtscheibe (24) in die Gehäuseöffnung (2) dichtend eingesetzt ist und vor der Vorderwand (3) des Gehäuses (5) eine Waschdüse (52) sowie ein motorisch angetriebener Scheibenwischer (110) angeordnet sind.

2. Modul nach Anspruch 1, dadurch gekennzeichnet, daß die Klarsichtscheibe drehbar in die Gehäuseöffnung (2) eingesetzt ist.

3. Modul nach Anspruch 2, dadurch gekennzeichnet, daß die Klarsichtscheibe (24) in einer Zahnradbuchse (26) aufgenommen ist, welche durch sich am Gehäuse (5) abstützende Wälzlager (28) drehbar ist und über ein Getriebe (32) mit einer Abtriebswelle (34) eines Elektromotors (35) gekoppelt ist.

4. Modul nach einem der vorstehenden Ansprüche, dadurch gekennzeichnet, daß die Vorderwand (3) des Gehäuses (5) eine weitere Öffnung (8) aufweist in welche ein Mikrofon (40) eingesetzt ist.

5. Modul nach einem der vorstehenden Ansprüche, dadurch gekennzeichnet, daß hinter der Klarsichtscheibe (24) ein Heizring (38) für die Bildaufnahmeeinrichtung (10) angeordnet ist.

6. Modul nach Anspruch 5, dadurch gekennzeichnet, daß der Heizring (38) ein selbstregelndes PTC-Element aufweist.

7. Modul nach einem der vorstehenden Ansprüche, dadurch gekennzeichnet, daß aus der Vorderwand (3) des Gehäuses (5) ein Vorsprung (7, 107) um etwa die Stärke des Karosserieteils vorsteht, in welchem die Klarsichtscheibe (24), die Waschdüse (52) und der Scheibenwischer (110) sowie gegebenenfalls das Mikrofon (40) angeordnet sind.

## Claims

1. An image pick-up module (1) which can be fitted into a bodywork portion, comprising a housing (5) which encloses an image pick-up device (10, 15) and in which the image pick-up device is held behind a clear-vision screen (24) which covers an opening (2) in the housing, wherein an objective lens (15) of the image pick-up device (10) is arranged behind the clear-vision screen (24) and a cleaning device (50, 60) is provided at the clear-vision screen, characterised in that the clear-vision screen (24) is sealingly fitted into the opening (2) in the housing and arranged in front of the front wall (3) of the housing (5) is a washer nozzle (52) and a motor-driven screen washer (110).

2. A module according to claim 1 characterised in that the clear-vision screen is rotatably fitted into the opening (2) in the housing.

3. A module according to claim 2 characterised in that the clear-vision screen (24) is accommodated in a gear sleeve (26) which is rotatable by a rolling bearing (28) supported on the housing (5) and is coupled by way of a transmission (32) to an output shaft (34) of an electric motor (35).

4. A module according to one of the preceding claims characterised in that the front wall (3) of the housing (5) has a further opening (8) into which a microphone (40) is fitted.

5. A module according to one of the preceding claims characterised in that a heating ring (38) for the image pick-up device (10) is arranged behind the clear-vision screen (24).

6. A module according to claim 5 characterised in that the heating ring (38) has a self-regulating PTC-element.

7. A module according to one of the preceding claims characterised in that a projection (7, 107) projects from the front wall (3) of the housing (5) by approximately the thickness of the bodywork portion, the clear-vision screen (24), the washer nozzle (52) and the screen washer (110) and possibly the microphone (40) being arranged therein.

## Revendications

1. Unité de prise d'image (1) pouvant être installée dans une partie de carrosserie, avec un boîtier (5) entourant le dispositif de prise d'image (10, 15) dans laquelle le dispositif de prise d'image est maintenu derrière une vitre anti-buée (24) recouvrant une ouverture du boîtier (2), un objectif (15) du dispositif de prise d'image (10) étant disposé derrière la vitre anti-buée (24) et un dispositif de nettoyage (50, 60) étant prévu sur la vitre anti-buée, caractérisée en ce que la vitre anti-buée (24) est utilisée dans l'ouverture du boîtier (2), faisant joint et en ce que devant la paroi avant (3) du boîtier (5) sont disposés une buse de lavage (52) de même qu'un essuie-glace (110) actionné par moteur.

2. Unité selon la revendication 1, caractérisée en ce que la vitre anti-buée est installée de façon à pivoter dans l'ouverture du boîtier (2).

3. Unité selon la revendication 2, caractérisée en ce que la vitre anti-buée (24) est captée dans une douille d'engrenage (26) qui est pivotable grâce à des paliers (28) s'appuyant sur le boîtier (5) et accouplée à l'arbre (34) d'un moteur électrique (35) par l'intermédiaire d'un engrenage (32).

4. Unité selon l'une des revendications précédentes, caractérisée en ce que la paroi avant (3) du boîtier (5) présente une autre ouverture (8) dans laquelle est placé un microphone (40).

5. Unité selon l'une des revendications précédentes, caractérisée en ce que derrière la vitre anti-buée (24) est disposé un anneau de chauffage (38) pour le dispositif de prise d'image (10).

6. Unité selon la revendication 5, caractérisée en ce que l'anneau de chauffage (38) présente un élément CPT autoréglable.

7. Unité selon l'une des revendications précédentes, caractérisée en ce qu'une avancée (7, 107) dépasse de la paroi avant (3) du boîtier (5), environ de l'épaisseur de la partie de carrosserie, dans laquelle sont disposés la vitre anti-buée (24), la buse de lavage (52) et l'essuie-glace (110) de même que le cas échéant le microphone (40).
